# EUROPÄISCHE PATENTSCHRIFT

(11) **EP 4 088 091 B1**
(45) Veröffentlichungstag und Bekanntmachung des Hinweises auf die Patenterteilung: **26.11.2025**
(21) Anmeldenummer: 20830229.9
(22) Anmeldetag: 18.12.2020
(51) Int. Cl.: G01D 11/30

(54) **STUTZENANORDNUNG UND PROZESSBEHÄLTER**
PORT ARRANGEMENT AND PROCESS VESSEL
AGENCEMENT DE MANCHON ET RECIPIENT DE TRAITEMENT

(30) Priorität: 19.12.2019 CH 16682019
(43) Veröffentlichungstag der Anmeldung: 16.11.2022
(73) Patentinhaber: Edelstahl Maurer AG, 4147 Aesch (CH)
(72) Erfinder: MAURER, Emanuel, 4147 Aesch (CH)
(74) Vertreter: Latscha Schöllhorn Partner AG
(86) Internationale Anmeldenummer: PCT/EP2020/087285
(87) Internationale Veröffentlichungsnummer: WO 2021/123356

(56) Entgegenhaltungen:
- DE-A1- 102009 020 439
- DE-A1- 102012 203 355
- US-A1- 2010 230 963

## Beschreibung

### Technisches Gebiet

Die Erfindung betrifft eine Stutzenanordnung gemäss dem Oberbegriff des unabhängigen Anspruchs 1 sowie einen Prozessbehälter mit einer solchen Stutzenanordnung.

Derartige Stutzenanordnungen mit einem stationären Stutzenelement kommen regelmässig in Anlagen der pharmazeutischen, der biotechnologischen, der chemischen und der Lebensmittelindustrie zum Einsatz, wie beispielsweise in Tanks, Kesseln, Reaktoren, Rohrleitungen und ähnlichen Prozessbehältern.

### Stand der Technik

Neben anderen Verbindungssystemen, wie sie beispielsweise in der US 2010/0230963 A1 und der EP 0 174 417 A1 beschrieben sind, ist gemeinhin bekannt als standardmässige Anschlussverbindung für den Einbau von Sensoren oder Armaturen in Prozessbehälter der sogenannte Ingoldstutzen, wie beispielsweise einer in der DE 10 2012 203 355 A1 beschrieben ist. Ingoldstutzen weisen ein in die Behälterwand fest eingeschweisstes Stutzenelement auf, welches typischerweise eine Durchgangsbohrung mit einem Innendurchmesser von 25 mm oder von 40 mm und einer Toleranz H7 ("25H7" bzw. "40H7") umfasst. Die Durchgangsbohrung nimmt den Sensor oder die Armatur auf, die mit einer Überwurfmutter am Sensor- oder Armaturensockel an ein prozessabseitiges Aussengewinde des Ingoldstutzens angeschraubt wird.

Die bekannten Ingoldstutzen weisen allerdings ein erhebliches Sicherheitsrisiko dahingehend auf, dass bei einem Ausbau der Armatur bei noch vorhandenem Prozessdruck im Prozessbehälter, der für die Abdichtung verantwortliche O-Ring an der Armatur während des Herausziehens aus der Durchgangsbohrung bis zum Schluss mit der Innenwand der Durchgangsbohrung abdichtet. Dies kann dazu führen, dass beim endgültigen Lösen der Überwurfmutter die Armatur plötzlich wie ein Geschoss weggeschleudert wird und das Prozessmedium mit ggf. schwerwiegenden Folgen unter Druck aus der offenen Durchgangsbohrung austritt. Zur Verminderung dieses Sicherheitsrisikos sind beispielsweise aus der DE 10 2012 203 355 B4 auch Sicherheits-Ingoldstutzen bekannt, bei denen erst der Prozessdruck abgebaut wird, bevor die Überwurfmutter vollständig gelöst ist.

Zudem kommt es beim Ein- und Ausbauen bzw. Auswechseln der einzelnen Armaturen oder Sensoren immer wieder zu unerwünschten Deformationen oder Beschädigung des 25H7- bzw. 40H7-Innendurchmessers beziehungsweise der Durchgangsbohrung oder des Stutzenrandes von eingeschweissten Ingoldstutzen. Das kann dazu führen, dass die Armaturen beziehungsweise Sensoren nicht mehr sauber angeschlossen werden können oder dass die Dichtheit des Anschlusses gefährdet ist, was insbesondere bei aseptischen Prozessbehältern erhebliche Schwierigkeiten nach sich ziehen kann. Um dies zu verhindern beziehungsweise dem zu begegnen, muss typischerweise das beschädigte Stutzenelement herausgeschnitten und durch ein neues, unbeschädigtes eingeschweisstes Stutzenelement ersetzt werden. Dies ist häufig technisch anspruchsvoll, sodass ein Montagefachmann benötigt wird, und unterbricht den Betrieb des Prozessbehälters für eine verhältnismässig lange Dauer.

Überdies verändert sich beim Einschweissen von Stutzenelementen die Form des Innendurchmessers bzw. der Durchgangsbohrung in unerwünschter Weise, was üblicherweise eine Überprüfung der runden Form der Durchgangsbohrung mit einem spezifischen Messwerkzeug nach sich zieht. Um solchen Veränderungen zu begegnen, werden häufig die Stutzenelemente mit einem leichten Untermass wie beispielsweise 24.8 mm oder 39.8 mm Innendurchmesser vorgesehen und nach dem Einschweissen mit einem spezifischen Werkzeug wie beispielsweise einer Reibale auf 25H7 beziehungsweise 40H7 ausgerieben. Dies zieht wiederum einen zusätzlichen Arbeitsaufwand nach sich und bedarf wiederum spezifisch geschulten Personals. Auch ist es bei einem solchen Ausreiben typischerweise nicht möglich, die Oberfläche der Durchgangsbohrung bevorzugt glatt auszuformen.

Darüber hinaus kommt es bei den bekannten Stutzenelementen teilweise auch zu Produktverunreinigungen durch eine beschädigte oder gelöste Mutter bzw. durch Abrieb beispielsweise von Dichtungen, welche(r) in den Prozessbehälter hineingelangt. Dies kann erhebliche Schwierigkeiten bei der Gewährleistung aseptischer Verhältnisse mit sich bringen.

Der vorliegenden Erfindung liegt daher die Aufgabe zu Grunde, eine Stutzenanordnung vorzuschlagen, welche eine verbesserte Prozesssicherheit aufweist, welche eine vergleichsweise präzise Geometrie gewährleisten kann, welche effizient herstellbar ist und welche eine sichere und einfache Handhabung beziehungsweise Wartung ermöglicht.

### Darstellung der Erfindung

Die Aufgabe wird erfindungsgemäss durch eine Stutzenanordnung gelöst, wie sie im unabhängigen Anspruch 1 definiert ist, sowie durch einen Prozessbehälter, wie er im Anspruch **12** definiert ist. Vorteilhafte Ausführungsvarianten der Erfindung ergeben sich aus den abhängigen Ansprüchen.

Das Wesen der Erfindung besteht im Folgenden: Eine Stutzenanordnung zum Prozessanschluss von insbesondere einer Armatur oder einem Sensor umfasst ein erstes, stationäres Stutzenelement und ein zweites, auswechselbares Stutzenelement welches fest mit der Armatur oder dem Sensor verbindbar ist. Das zweite, auswechselbare Stutzenelement ist derart ausgebildet, dass es zumindest teilweise beziehungsweise grossenteils von einer Aufnahmeöffnung des ersten, stationären Stutzenelements aufnehmbar ist. Insbesondere kann die Aufnahmeöffnung dazu ausgebildet sein, das zweite, auswechselbare Stutzenelement bündig aufzunehmen. Beispielsweise kann das zweite, auswechselbare Stutzenelement quasi als zylindrische Hülse geformt sein und die Aufnahmeöffnung entsprechend hohlzylindrisch. Des Weiteren ist zumindest eine Haltevorrichtung vorgesehen, welche zum Zusammenhalten des ersten, stationären Stutzenelements und des zweiten, auswechselbaren Stutzenelements ausgebildet ist.

Der Begriff "stationär" bezeichnet im Kontext der vorliegenden Erfindung generell eine fixe beziehungsweise unlösbare Verbindung des ersten Stutzenelements mit einem Prozessbehälter. Eine Verbindung wird dann als unlösbar bezeichnet, wenn sie nur durch Beschädigung oder Zerstörung der verbundenen Teile oder des jeweiligen Verbindungselements wieder getrennt werden kann. Üblicherweise ist das erste Stutzenelement (ortsfest) mit dem Prozessbehälter verschweisst und auf diese Weise stationär.

Der Begriff "auswechselbar" bezeichnet im Zusammenhang mit der Erfindung generell eine lösbare Verbindung, bei der das entsprechende Verbindungselement nicht beschädigt beziehungsweise zerstört werden muss, um die Verbindung zu lösen. Mit anderen Worten kann das zweite Stutzenelement - bei abgenommener Haltevorrichtung - im Wesentlichen ohne grösseren Kraftaufwand und ohne Einsatz eines Werkzeugs aus dem ersten Stutzenelement entnommen/gelöst werden bzw. in letzteres eingeführt werden.

Unter dem Begriff "fest verbunden" wird vorliegend wiederum eine nicht lösbare Verbindung verstanden, d.h. eine Verbindung die nicht ohne eine Beschädigung der beteiligten Bauteile gelöst werden kann. Die beteiligten Bauteile bilden dabei ein quasi einstückiges, auswechselbares Bauteil. Beispiele für derartige feste Verbindungen umfassen in erster Linie Schweissverbindungen aber auch Lötverbindungen, Klebeverbindungen, Nietverbindungen oder Press- und Schrumpfverbindungen.

Durch die quasi einstückige Ausgestaltung des zweiten, auswechselbaren Stutzenelements und der Armatur (vorzugsweise eine Reinigungsarmatur in Form eines CIP-Stutzens) bzw. dem Sensor, kann eine Lösung bereitgestellt werden, welche einerseits besonders einfach in der Handhabung ist und welche andererseits eine besonders hohe Betriebssicherheit gewährleistet.

Unter dem Begriff "Zusammenhalten" wird vorliegend ein form- und/oder kraftschlüssiger Sitz der zumindest einen Haltevorrichtung gegenüber dem ersten und dem zweiten Stutzenelement verstanden. Hierbei können je nach Ausbildung der Verbindungsstruktur zwischen dem ersten, stationären und dem zweiten, auswechselbaren Stutzenelement beispielsweise ein, zwei oder mehrere Haltevorrichtungen, wie etwa Halteringe, Klemmringe, Klemmhaken, Rohrhalteklemmen, Handspannvorrichtungen und/oder Federklemmen vorgesehen werden.

Die erfindungsgemässe Stutzenanordnung ermöglicht, dass beim Austausch von Armaturen bzw. Sensoren an Prozessbehältern, welcher in der Praxis beispielsweise zur Kontrolle diverser Prozessparameter regelmässig nötig ist, sichergestellt wird, dass keine derart grossen Kräfte auf das am Behälter fest angebrachte Stutzenelement ausgeübt werden müssen, dass damit eine Beschädigung oder Deformation desselben einhergeht. Die zumindest eine Haltevorrichtung erlaubt einen sicheren und einfach zu lösenden Zusammenhalt des ersten und zweiten Stutzenelements.

Darüber hinaus kann auch der Eintrag von abgelösten Teilen wie beispielsweise Montagemuttern und Verunreinigungen wie beispielsweise Abrieb von Dichtungen in den Prozessbehälter wirksam unterbunden werden. Zudem kann bei Bedarf das zweite Stutzenelement mit der Armatur oder dem Sensor auf einfache Weise ausgewechselt werden, ohne dass das erste Stutzenelement vom Prozessbehälter entfernt werden muss. Dieses Auswechseln kann werkzeuglos durch ein Lösen der Haltevorrichtung, ein Entfernen des beschädigten oder beeinträchtigten zweiten Stutzenelements bzw. der Armatur oder des Sensors, ein Einsetzen eines neuen unversehrten zweiten Stutzenelements mit einer fest verbundenen Armatur oder einem fest verbundenen Sensor und ein erneutes Aufbringen bzw. Spannen der Haltevorrichtung erreicht werden. Spezifische Montage oder Fachkenntnisse sind dazu nicht oder nur in untergeordnetem Umfang notwendig. Auch kann dieses Auswechseln vergleichsweise schnell erfolgen, sodass Betriebsunterbrüche stark reduziert oder gar vermieden werden können.

Weiter kann durch die Einsetzbarkeit des zweiten Stutzenelements zusammen mit der Armatur oder dem Sensor vermieden werden, dass die Armatur oder Sensor beeinträchtigt bzw. beschädigt wird.

Insbesondere kann das erste Stutzenelement als ein sogenannter TC-Stutzen gemäss der Deutschen Industrienorm (DIN) 32676 ausgebildet sein. Ein solches erstes Stutzenelement ermöglicht, dass die fest mit dem zweiten, auswechselbaren Stutzenelement verbundene Armatur (oder der Sensor) quasi direkt an das erste Stutzenelement angeschlossen werden kann. Danach kann das quasi einstückige Bauteil mittels Klemmen oder ggf. auf andere geeignete Art und Weise am ersten Stutzenelement befestigt werden.

Erfindungsgemäss weisen das erste, stationäre Stutzenelement eine erste Formschlussstruktur und das zweite, auswechselbare Stutzenelement eine zweite Formschlussstruktur auf, wobei die erste Formschlussstruktur und die zweite Formschlussstruktur formschlüssig ineinandergreifen, wenn das zweite, auswechselbare Stutzenelement zumindest teilweise von der Aufnahmeöffnung des ersten, stationären Stutzenelements aufgenommen ist. Eine solcher Formschluss ermöglicht eine sichere und stabile Montage des zweiten Stutzenelements am ersten Stutzenelemen mit vergleichsweise wenig Spiel. Insbesondere kann durch den Formschluss eine Bewegung quer zur Stutzenachse unterbunden beziehungsweise minimiert werden, was vor allem bei einer horizontalen oder abgeschrägten Ausrichtung der Stutzenachse erhebliche Vorteile bieten kann.

Dabei umfasst vorzugsweise das erste, stationäre Stutzenelement einen umlaufenden Flansch und das zweite, auswechselbare Stutzenelement einen umlaufenden Flansch, wobei die erste Formschlussstruktur am umlaufenden Flansch des ersten, stationären Stutzenelements als zumindest ein Vorsprung oder zumindest eine Aussparung und die zweite Formschlussstruktur gegengleich am umlaufenden Flansch des zweiten, auswechselbaren Stutzenelements als zumindest ein Vorsprung oder zumindest eine Aussparung ausgebildet sind, und wobei der zumindest eine Vorsprung und die zumindest eine Aussparung zusammen einen Formschluss bilden, wenn das zweite, auswechselbare Stutzenelement zumindest teilweise von der Aufnahmeöffnung des ersten, stationären Stutzenelements aufgenommen ist.

Bevorzugt weist also das zweite, auswechselbare Stutzenelement einen umlaufenden Flansch auf, welcher zumindest einen Vorsprung oder zumindest eine Aussparung umfasst, der/die mit zumindest einer gegengleichen Aussparung oder mit zumindest einem gegengleichen Vorsprung eines umlaufenden Flansches des ersten, stationären Stutzenelements einen Formschluss bildet.

Hierdurch wird für die Haltevorrichtung eine optimale Halterungsstruktur geschaffen, so dass etwa eine besonders gute Klemmwirkung erzielt werden kann. Wie erwähnt kann zudem durch den Formschluss eine Bewegung quer zur Stutzenachse unterbunden werden, was insbesondere bei einer horizontalen oder abgeschrägten Ausrichtung der Stutzenachse erhebliche Vorteile bieten kann. Der Vorsprung und die korrespondierende Aussparung können umlaufend ausgestaltet sein, es können aber auch jeweils zwei oder mehrere einzelne, voneinander beabstandete Vorsprünge und Aussparungen vorgesehen sein, welche zueinander korrespondierend ausgebildet sind. Der Vorsprung und die Aussparung können eine Nut-und-Feder-Verbindung der beiden umlaufenden Flansche der ersten und zweiten Stutzenelemente ermöglichen.

Vorzugsweise weisen der umlaufende Flansch des ersten, stationären Stutzenelements und der umlaufende Flansch des zweiten, auswechselbaren Stutzenelements jeweils eine Abschrägung auf, so dass sich im montierten Zustand der zusammengesetzte Flansch nach aussen hin verjüngt. Hierdurch kann wiederum der Sitz der Haltevorrichtung und somit dessen Halte- oder Klemmwirkung weiter verbessert werden.

Vorzugsweise umschliesst die Haltevorrichtung den Flansch des ersten, stationären Stutzenelements und den Flansch des zweiten, auswechselbaren Flanschelements klemmend und presst die beiden Bauteile fest zusammen. Mittels dieser Massnahme kann die Betriebssicherheit der Stutzenanordnung weiter erhöht werden.

Vorzugsweise umfasst die Aufnahmeöffnung des ersten, stationären Stutzenelements eine Einlassöffnung, welche derart ausgebildet ist, dass eine Armatur oder ein Sensor durch sie hindurchführbar ist. Die Einlassöffnung ist bevorzugt prozessseitig im Boden des ersten, stationären Stutzenelements vorgesehen und bildet den Durchgang durch die Wand des Prozessbehälters.

Vorzugsweise ist der Aussendurchmesser des von dem ersten, stationären Stutzenelement aufgenommenen Teils des zweiten, auswechselbaren Stutzenelements kleiner als der Innendurchmesser der Aufnahmeöffnung des ersten, stationären Stutzenelements. Mittels dieser Ausgestaltung kann sichergestellt werden, dass zwischen die Aussenwand des zweiten, auswechselbaren Stutzenelements und die Innenwand des ersten, stationären Stutzenelements noch ein Dichtelement beziehungsweise ein Teil eines Dichtelements einbringbar ist.

Bevorzugt ist nämlich in dem Ringspalt zwischen dem ersten, stationären Stutzenelement und dem zweiten, auswechselbaren Stutzenelement, jedenfalls teilweise, ein ringartiges Dichtungselement angeordnet. Das ringartige Dichtungselement bildet bevorzugt einen Sitz für das zweite, auswechselbare Stutzenelement aus, wobei es im montierten Zustand auch dessen Seitenwände jedenfalls im unteren Bereich dichtend umgibt.

Weiter vorzugsweise weist das ringartige Dichtungselement einen umlaufenden Wulst auf, welcher von korrespondierenden Nuten an der Unterseite des zweiten, auswechselbaren Stutzenelements und im Aufnahmeboden des ersten, stationären Stutzenelements dichtend aufgenommen wird. Mittels der vorbeschriebenen Ausgestaltung des ringartigen Dichtelements kann eine äusserst effektive Abdichtung zwischen dem ersten, stationären Stutzenelement und dem zweiten, auswechselbaren Stutzenelement geschaffen werden, so dass insbesondere kein Prozessmedium zwischen den beiden Bauteilen austreten kann.

Vorzugsweise umfasst die Stutzenanordnung eine Armatur oder einen Sensor, wobei das zweite, auswechselbare Stutzenelement fest mit der Armatur beziehungsweise dem Sensor verbunden ist. Beispielsweise kann das zweite, auswechselbare Stutzenelement an der Armatur beziehungsweise dem Sensor angeschweisst oder auf andere Weise stoffschlüssig verbunden sein. In verbundenem Zustand bilden das zweite, auswechselbare Stutzenelement und die Armatur beziehungsweise der Sensor eine Einheit, die als Ganzes gehandhabt wird. Der Begriff "fest verbunden" kann auch Ausführungsformen umfassen, bei denen das zweite, auswechselbare Stutzenelement integral in der Armatur beziehungsweise im Sensor ausgebildet ist.

Vorzugsweise umfasst die Armatur eine CIP (Cleaning In Place)-Reinigungsarmatur. Dabei ist die Stutzenanordnung vorzugsweise in den Deckel des Behälters eingebracht bzw. das erste, stationäre Stutzenelement ist in die Wand des Behälterdeckels eingeschweisst. Diese Anwendung der Stutzenanordnung ermöglicht eine besonders einfache und flexible Reinigung von allen Arten von z.B. Behältern oder Tanks, wie sie etwa in der chemischen, biotechnologischen, pharmazeutischen oder der Nahrungsmittel-Industrie zum Einsatz kommen.

Es ist allerdings auch denkbar, dass beispielsweise ein Sensor, welcher entsprechend fest mit dem zweiten, auswechselbaren Stutzenelement verbunden ist, in ein (seitlich) in die Behälterwand des Prozessbehälters eingeschweisstes erstes, stationäres Stutzenelement eingebracht wird und mittels einer Haltervorrichtung entsprechend befestigt wird.

Ein anderer Aspekt der Erfindung betrifft einen Prozessbehälter mit zumindest einer Stutzenanordnung, wie sie vorstehend beschrieben wurde. Dabei ist das erste, stationäre Stutzenelement oder in die Wandung des Prozessbehälters in den Behälterdeckel eingeschweisst. Vorzugsweise umfasst die entsprechende Armatur der Stutzenanordnung einen CIP-Reinigungsarmatur, welche mit einem CIP-Sprühkopf in das Behälterinnere hineinragt. Hierdurch kann eine besonders einfache und flexible Reinigung von allen Arten von z.B. Behältern oder Tanks, wie sie etwa in der chemischen, biotechnologischen, pharmazeutischen oder der Nahrungsmittel-Industrie zum Einsatz kommen, gewährleistet werden.

Mit dem erfindungsgemässen Prozessbehälter können die oben im Zusammenhang mit der erfindungsgemässen Stutzenanordnung und deren bevorzugten Ausführungsformen beschriebenen Vorteile und Effekte auf effiziente Weise in der Praxis realisiert werden.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Stutzenanordnung unter Bezugnahme auf die beigefügten Zeichnungen anhand von Ausführungsbeispielen detaillierter beschrieben. Es zeigen:
- Fig. 1:: eine beispielhafte Ausführungsform einer erfindungsgemässen Stutzenanordnung im montierten Zustand mit CIP-Reinigungsstutzen im Querschnitt;
- Fig. 2:: eine perspektivische Aussenansicht einer erfindungsgemässen Stutzenanordnung im montierten Zustand mit aufgeschraubter Flügelmutter; und
- Fig. 3:: einen erfindungsgemässen Prozessbehälter mit einer erfindungsgemässen Stutzenanordnung mit schematisch dargestelltem CIP-Reinigungsstutzen.

### Weg(e) zur Ausführung der Erfindung

Bestimmte Ausdrücke können in der folgenden Beschreibung aus praktischen Gründen verwendet werden und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Figuren dargestellt verwendet. Diese räumlichen Relativangaben umfassen auch andere Positionen und Ausrichtungen als die in den Figuren dargestellten. Zum Beispiel wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

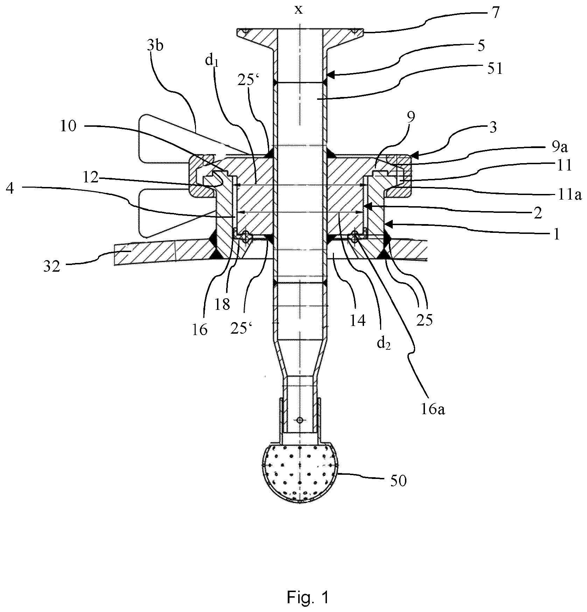

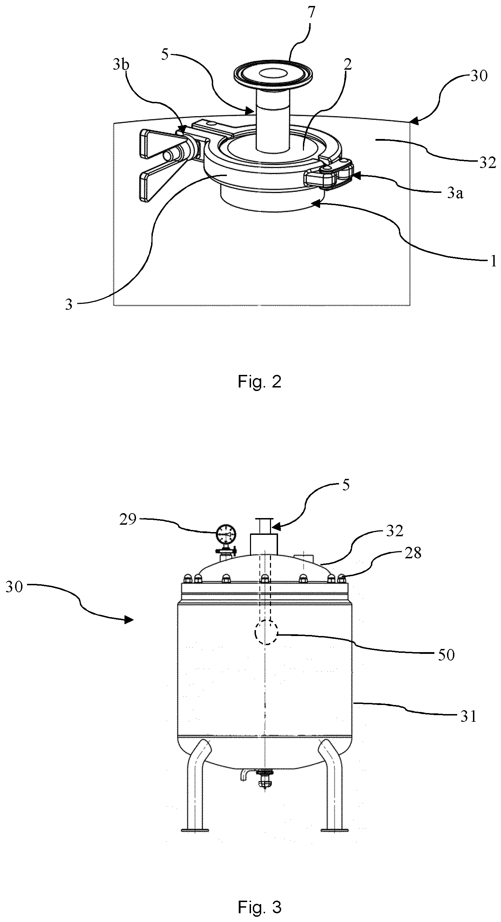

In Fig. 1 wird eine beispielhafte Ausführungsform einer erfindungsgemässen Stutzenanordnung mit einem ersten, stationären Stutzenelement 1, einem zweiten, auswechselbaren Stutzenelement 2 und einer Haltevorrichtung 3 im zusammengebauten Zustand veranschaulicht. Dabei ist die zweite, auswechselbare Stutzenanordnung 2 fest mit einer Armatur in Form eines CIP-Reinigungsstutzens 5 verbunden und umschliesst diesen. Die feste Verbindung zwischen der zweiten, auswechselbaren Stutzenanordnung 2 und dem CIP-Reinigungsstutzens 5 wird hier durch Verschweissen erreicht, was anhand der Schweissnähte 25' veranschaulicht wird. Der CIP-Reinigungsstutzen 5 umfasst ein Anschlussteil 7 für eine CIP-Anlage (nicht gezeigt), eine Durchgangsbohrung 51 für eine Reinigungsflüssigkeit sowie einen CIP-Sprühkopf 50 zum Versprühen der Reinigungsflüssigkeit. Der CIP-Sprühkopf 50 ist hier entsprechend innerhalb eines Prozessbehälters (vgl. Fig. 3) mit einem Behälterdeckel 32 angeordnet.

Das erste, stationäre Stutzenelement 1 ist dabei in Wand des Behälterdeckels 32 eingeschweisst, was anhand der Schweissnähte 25 verdeutlicht wird. Das erste, stationäre Stutzenelement 1 weist eine Aufnahmeöffnung 4 mit einem Innendurchmesser d₁ auf. Weiterhin umfasst das erste, stationäre Stutzenelement 1 einen Aufnahmeboden 18, welcher wiederum eine Einlassöffnung 14 definiert, welche einen Zugang zum Inneren des Prozessbehälters ermöglicht. Bevorzugt erweitert sich die Einlassöffnung 14 in Richtung der Innenseite des Prozessbehälters. Die Wandstärke des Aufnahmebodens 18 entspricht im Wesentlichen der Wandstärke der Wandung 32. An seinem oberen Ende weist das erste, stationäre Stutzenelement 1 einen umlaufenden Flansch 11 auf, welcher auf seiner Oberseite einen umlaufenden Vorsprung 12 als erste Formschlussstruktur umfasst. Der Flansch 12 weist an seiner Unterseite eine nach aussen weisende Abschrägung 11a auf.

Weiterhin ist ein ringartiges Dichtungselement 16 mit einem Wulst 16a vorgesehen, welches in die Aufnahmeöffnung 4 einbringbar ist und vom Aufnahmeboden 18 aufgenommen wird. Das ringartige Dichtungselement 16 dient der Abdichtung gegenüber dem zweiten, auswechselbaren Stutzenelement 2. Dieses wird jedenfalls in seinem unteren Bereich von der Aufnahmeöffnung 4 des ersten, stationären Stutzenelements 1 aufgenommen. Es weist hier regelmässig einen Aussendurchmesser d₂ auf, welcher kleiner ist als der Innendurchmesser d₁ der Aufnahmeöffnung 4. Bevorzugt verbleibt etwas Spiel zwischen dem aufgenommenen Bereich des zweiten, auswechselbaren Stutzenelements 2 und der Innenwand des ersten, stationären Stutzenelements 1.

Das zweite, auswechselbare Stutzenelement 2 umfasst weiterhin einen umlaufenden Flansch 9, an dessen Unterseite eine umlaufende Aussparung 10 als zweite Formschlussstruktur eingebracht ist, welche mit dem Vorsprung 12 auf der Oberseite des Flansches 11 des ersten, stationären Stutzenelements 1 formschlüssig korrespondiert. Der Flansch 9 weist an seiner Oberseite eine nach aussen weisende Abschrägung 9a auf.

Die Haltevorrichtung 3 dient dem sicheren Zusammenhalt des ersten, stationären Stutzenelements 1 und des zweiten, auswechselbaren Stutzenelements 2 im Bereich der Abschrägungen 9a und 11a der beiden Flansche 9 und 11. Die Längsachse der Stutzenanordnung bzw. des CIP-Reinigungsstutzens 5 wird vorliegend mit x bezeichnet.

Der Flansch 11 des ersten, stationären Stutzenelements 1 und der Flansch 9 des zweiten Stutzenelements 2 greifen formschlüssig ineinander, d.h. der Flansch 9 liegt auf dem Flansch 11 auf und der Vorsprung 12 des Flansches 11 greift formschlüssig in die Aussparung 10 des Flansches 9 ein. Von aussen her werden die beiden Flansche 9 und 11 von der Haltevorrichtung 3 zusammengehalten bzw. zusammengepresst, wobei die vorbeschriebenen Abschrägungen 9a und 11a der beiden Flansche 9 und 11 für einen optimalen Klemmsitz der Haltevorrichtung 3 sorgen.

Des Weiteren erkennt man, dass die Schweissnähte 25' das zweite Stutzenelement 2 bzw. den CIP-Reinigungsstutzen 5 gegenüber der Einlassöffnung 14 abdichten. Zudem wird durch den Wulst 16a des ringartigen Dichtungselements 16, welcher regelmässig in einer Nut in der Unterseite des zweiten, auswechselbaren Stutzenelements 2 sowie in einer Nut im Aufnahmeboden 18 des ersten, stationären Stutzenelements 1 aufgenommen ist, eine besonders wirksame Abdichtung des ersten, stationären Stutzenelements 1 gegenüber dem zweiten, auswechselbaren Stutzelement 2 geschaffen. Das ringartige Dichtungselement 16 fungiert dabei sozusagen als Sitz für das zweite, auswechselbare Stutzenelement 2. Es erstreckt sich daher bevorzugt auch teilweise in den zwischen dem zweiten, auswechselbaren Stutzenelement 2 und der Innenseite des ersten, stationären Stutzenelements 1 gebildeten seitlichen Ringspalt der Aufnahmeöffnung 4 hinein.

**Fig.** 2 stellt eine perspektivische Ansicht eines mittels einer erfindungsgemässen Stutzenanordnung in einer Wandung des Behälterdeckels 32 montierten CIP-Reinigungsstutzens 5 bereit. Man erkennt insbesondere die Scharniereinheit 3a der Haltevorrichtung 3 sowie die entsprechende Festziehschraube mit der Flügelmutter 3b, über welche der auf die Flansche auszuübende Anpressdruck eingestellt werden kann. Das Anschlussteil 7 ragt nach aussen von dem zweiten Stutzenelement 2 ab.

Schliesslich wird in **Fig.** 3 noch ein erfindungsgemässer Prozessbehälter 30 mit einer Behälterwand 31 und einem Behälterdeckel 32 gezeigt. In die Wandung des Behälterdeckels 32 ist dabei eine Stutzenanordnung mit einem CIP-Reinigungsstutzen 5 eingebracht. Auf dem Deckel 32 des Prozessbehälters 30 ist zudem ein Druckanzeiger 29 angeordnet. Der CIP-Sprühkopf 50 des CIP-Reinigungsstutzens ragt in das Innere des Prozessbehälters hinein (gestrichelt dargestellt). Ausserdem erkennt man noch die Verschraubung 28 des Behälterdeckels 32 im oberen Bereich des Prozessbehälters 30.

Es ist allerdings auch denkbar, dass etwa ein Sensor oder mehrere Sensoren, welche entsprechend fest mit einem zweiten, auswechselbaren Stutzenelement verbunden sind, in ein (seitlich) in die Behälterwand des Prozessbehälters eingeschweisstes erstes, stationäres Stutzenelement eingebracht und mittels von entsprechenden Haltervorrichtungen befestigt werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

### Liste der Bezugszeichen:

- 1: erstes, stationäres Stutzenelement
- 2: zweites, auswechselbares Stutzenelement
- 3: Haltevorrichtung
- 3a: Scharniereinheit
- 3b: Festziehschraube
- 4: Aufnahmeöffnung (erstes, stationäre Stutzenelement)
- 5: Armatur/Sensor bzw. CIP-Reinigungsstutzen
- 6: Aussengewinde (zweites, auswechselbares Stutzenelement)
- 7: Anschlussteil
- 9: umlaufender Flansch (zweites, auswechselbares Stutzenelement)
- 9a: Abschrägung
- 10: Aussparung
- 11: umlaufender Flansch (erstes, stationäres Stutzenelement)
- 11a: Abschrägung
- 12: Vorsprung
- 14: Einlassöffnung
- 16: ringartiges Dichtungselement
- 16a: umlaufender Wulst
- 18: Aufnahmeboden (erstes, stationäres Stutzenelement)
- 25, 25': Schweissnähte
- 28: Verschraubung Prozessbehälterdeckel
- 29: Druckanzeiger
- 30: Prozessbehälter
- 31: Behälterwand
- 32: Behälterdeckel
- 50: CIP-Sprühkopf
- 51: Durchgangsbohrung CIP-Stutzen
- x: Längsachse (Stutzenanordnung/CIP-Stutzen)
- d₁: Innendurchmesser Aufnahmeöffnung
- d₂: Aussendurchmesser (aufgenommener Teil zweites, auswechselbares Stutzenelement)

## Patentansprüche

1. Stutzenanordnung zum Prozessanschluss von einer Armatur (5) oder einem Sensor aufweisend:
ein erstes, stationäres Stutzenelement (1),
ein zweites, auswechselbares Stutzenelement (2), welches fest mit der Armatur (5) oder dem Sensor verbindbar ist und welches derart ausgebildet ist, dass es zumindest teilweise von einer Aufnahmeöffnung (4) des ersten, stationären Stutzenelements (1) aufnehmbar ist, und
zumindest eine Haltevorrichtung (3), welche zum Zusammenhalten des ersten, stationären Stutzenelements (1) und des zweiten, auswechselbaren Stutzenelements (2) ausgebildet ist,
**dadurch gekennzeichnet, dass**
das erste, stationäre Stutzenelement (1) eine erste Formschlussstruktur (12) und das zweite, auswechselbare Stutzenelement (2) eine zweite Formschlussstruktur (10) aufweisen, und wobei die erste Formschlussstruktur (12) und die zweite Formschlussstruktur (10) formschlüssig ineinandergreifen, wenn das zweite, auswechselbare Stutzenelement (2) zumindest teilweise von der Aufnahmeöffnung (4) des ersten, stationären Stutzenelements aufgenommen ist.

2. Stutzenanordnung nach Anspruch 1, wobei das erste, stationäre Stutzenelement (1) einen umlaufenden Flansch (11) und das zweite, auswechselbare Stutzenelement (2) einen umlaufenden Flansch (9) aufweisen, wobei die erste Formschlussstruktur am umlaufenden Flansch (11) des ersten, stationären Stutzenelements (1) als zumindest ein Vorsprung (12) oder zumindest eine Aussparung (10) und die zweite Formschlussstruktur gegengleich am umlaufenden Flansch (9) des zweiten, auswechselbaren Stutzenelements (2) als zumindest ein Vorsprung (12) oder zumindest eine Aussparung (10) ausgebildet sind, und wobei der zumindest eine Vorsprung (12) und die zumindest eine Aussparung (10) zusammen einen Formschluss bilden, wenn das zweite, auswechselbare Stutzenelement (2) zumindest teilweise von der Aufnahmeöffnung (4) des ersten, stationären Stutzenelements aufgenommen ist.

3. Stutzenanordnung nach Anspruch 2, wobei der umlaufende Flansch (11) des ersten, stationären Stutzenelements (1) und der umlaufende Flansch (9) des zweiten, auswechselbaren Stutzenelements (2) jeweils eine Abschrägung (9a, 11a) aufweisen, so dass sich im montierten Zustand der zusammengesetzte Flansch nach aussen hin verjüngt.

4. Stutzenanordnung nach Anspruch 2 oder 3, wobei die Haltevorrichtung (3) dazu ausgebildet ist, den Flansch (11) des ersten, stationären Stutzenelements (1) und den Flansch (9) des zweiten, auswechselbaren Stutzenelements (2) klemmend zu umschliessen und zusammenzupressen.

5. Stutzenanordnung nach einem der vorhergehenden Ansprüche, wobei die Aufnahmeöffnung (4) des ersten, stationären Stutzenelements (1) eine Einlassöffnung (14) umfasst, welche derart ausgebildet ist, dass die Armatur (5) oder der Sensor durch sie hindurchführbar ist.

6. Stutzenanordnung nach einem der vorhergehenden Ansprüche, wobei der Aussendurchmesser (d₂) des von dem ersten, stationären Stutzenelement (1) aufgenommenen Teils des zweiten, auswechselbaren Stutzenelements (2) kleiner ist als der Innendurchmesser (d₁) der Aufnahmeöffnung (13) des ersten, stationären Stutzenelements (1).

7. Stutzenanordnung nach einem der vorhergehenden Ansprüche, wobei zwischen dem ersten, stationären Stutzenelement (1) und dem zweiten, auswechselbaren Stutzenelement (2) ein ringartiges Dichtungselement (16) angeordnet ist.

8. Stutzenanordnung nach Anspruch 7, wobei das ringartige Dichtungselement (16) einen Sitz für das zweite, auswechselbare Stutzenelement (2) ausbildet, wobei es im montierten Zustand dessen Seitenwände jedenfalls im unteren Bereich dichtend umgibt.

9. Stutzenanordnung nach Anspruch 7 oder 8, wobei das ringartige Dichtungselement (16) einen umlaufenden Wulst (16a) aufweist, welcher von korrespondierenden Nuten (21, 22) an einer Unterseite des zweiten, auswechselbaren Stutzenelements (2) und einem Aufnahmeboden (18) des ersten, stationären Stutzenelements (1) dichtend aufgenommen wird.

10. Stutzenanordnung nach einem der vorhergehenden Ansprüche, die eine Armatur (5) oder einen Sensor umfasst, wobei das zweite, auswechselbare Stutzenelement (2) fest mit der Armatur (5) beziehungsweise dem Sensor verbunden ist.

11. Stutzenanordnung nach Anspruch 10, wobei die Armatur (5) einen CIP-Reinigungsarmatur umfasst.

12. Prozessbehälter aufweisend zumindest eine Stutzenanordnung gemäss einem der Ansprüche 1 bis 11, wobei das erste, stationäre Stutzenelement (1) der Stutzenanordnung in eine Wandung (31) des Prozessbehälters (30) oder in den Behälterdeckel (32) eingeschweisst ist.

13. Prozessbehälter nach Anspruch 12, wobei die Armatur (5) eine CIP-Reinigungsarmatur umfasst, welche mit einem CIP-Sprühkopf in das Behälterinnere hineinragt.

## Claims

1. Connector arrangement for connecting a fitting (5) or a sensor to a process, comprising:
a first, stationary connector element (1),
a second, replaceable connector element (2), which can be firmly connected to the fitting (5) or the sensor and which is designed in such a way that it can be at least partially received by a receiving opening (4) of the first, stationary connector element (1), and
at least one holding device (3), which is designed to hold the first, stationary connector element (1) and the second, replaceable connector element (2) together,
**characterized in that**
the first, stationary connector element (1) has a first form-fitting structure (12) and the second, replaceable connector element (2) has a second form-fitting structure (10), and wherein the first form-fitting structure (12) and the second form-fitting structure (10) engage each other in a form-fitting manner when the second, replaceable connector element (2) is at least partially received by the receiving opening (4) of the first, stationary connector element.

2. Connector arrangement according to claim 1, wherein the first, stationary connector element (1) has a circumferential flange (11) and the second, replaceable connector element (2) has a circumferential flange (9), wherein the first form-fitting structure is provided on the circumferential flange (11) of the first, stationary connector element (1) as at least one projection (12) or at least one recess (10), and the second form-fitting structure is formed oppositely on the circumferential flange (9) of the second, replaceable connector element (2) as at least one projection (12) or at least one recess (10), and wherein the at least one projection (12) and the at least one recess (10) together form a form-fitting connection when the second, replaceable connector element (2) is at least partially received by the receiving opening (4) of the first, stationary connector element.

3. Connector arrangement according to claim 2, wherein the circumferential flange (11) of the first, stationary connector element (1) and the circumferential flange (9) of the second, replaceable connector element (2) each have a bevel (9a, 11a) so that, when assembled, the composite flange tapers outwardly.

4. Connector arrangement according to claim 2 or 3, wherein the holding device (3) is designed to clamp the flange (11) of the first, stationary connector element (1) and the flange (9) of the second, replaceable connector element (2) and press them together.

5. Connector arrangement according to any one of the preceding claims, wherein the receiving opening (4) of the first, stationary connector element (1) comprises an inlet opening (14) which is designed such that the fitting (5) or the sensor can be passed through it.

6. Connector arrangement according to any one of the preceding claims, wherein the outer diameter (d2) of the part of the second, replaceable connector element (2) received by the first, stationary connector element (1) is smaller than the inner diameter (d1) of the receiving opening (13) of the first, stationary connector element (1).

7. Connector arrangement according to any one of the preceding claims, wherein an annular sealing element (16) is arranged between the first, stationary connector element (1) and the second, replaceable connector element (2).

8. Connector arrangement according to claim 7, wherein the ring-shaped sealing element (16) forms a seat for the second, replaceable connector element (2), wherein, when assembled, it surrounds the side walls of the latter in a sealing manner, at least in the lower region.

9. Connector arrangement according to claim 7 or 8, wherein the ring-like sealing element (16) has a circumferential bead (16a) which is held in a sealing manner by corresponding grooves (21, 22) on an underside of the second, replaceable connector element (2) and a receiving base (18) of the first, stationary connector element (1).

10. Connector arrangement according to any one of the preceding claims, comprising a fitting (5) or a sensor, wherein the second, replaceable connector element (2) is firmly connected to the fitting (5) or the sensor, respectively.

11. Connector arrangement according to claim 10, wherein the fitting (5) comprises a CIP cleaning fitting.

12. Process container comprising at least one connector arrangement according to one of claims 1 to 11, wherein the first, stationary connector element (1) of the connector arrangement is welded into a wall (31) of the process vessel (30) or into the vessel cover (32).

13. Process container according to claim 12, wherein the fitting (5) comprises a CIP cleaning fitting which protrudes into the interior of the container with a CIP spray head.

## Revendications

1. Ensemble pièce de raccordement pour le raccordement de traitement d'un raccord (5) ou d'un capteur, présentant :
un premier élément de pièce de raccordement fixe (1),
un second élément de pièce de raccordement interchangeable (2), lequel peut être raccordé de manière fixe au raccord (5) ou au capteur et est conçu de telle sorte qu'il peut être reçu au moins partiellement par une ouverture de réception (4) du premier élément de pièce de raccordement fixe (1), et
au moins un dispositif de maintien (3), lequel est conçu pour maintenir ensemble le premier élément de pièce de raccordement fixe (1) et le second élément de pièce de raccordement interchangeable (2),
**caractérisé en ce que**
le premier élément de pièce de raccordement fixe (1) présente une première structure à complémentarité de forme (12) et le second élément de pièce de raccordement interchangeable (2) présente une seconde structure à complémentarité de forme (10), et dans lequel la première structure à complémentarité de forme (12) et la seconde structure à complémentarité de forme (10) viennent en prise l'une dans l'autre par complémentarité de forme lorsque le second élément de pièce de raccordement interchangeable (2) est reçu au moins partiellement par l'ouverture de réception (4) du premier élément de pièce de raccordement fixe.

2. Ensemble pièce de raccordement selon la revendication 1, dans lequel le premier élément de pièce de raccordement fixe (1) présente une bride circonférentielle (11) et le second élément de pièce de raccordement interchangeable (2) présente une bride circonférentielle (9), dans lequel la première structure à complémentarité de forme est réalisée sur la bride circonférentielle (11) du premier élément de pièce de raccordement fixe (1) sous forme d'au moins une saillie (12) ou d'au moins un évidement (10) et la seconde structure à complémentarité de forme est réalisée de manière opposée sur la bride circonférentielle (9) du second élément de pièce de raccordement interchangeable (2) sous forme d'au moins une saillie (12) ou d'au moins un évidement (10), et dans lequel l'au moins une saillie (12) et l'au moins un évidement (10) forment conjointement une liaison par complémentarité de forme lorsque le second élément de pièce de raccordement interchangeable (2) est reçu au moins partiellement par l'ouverture de réception (4) du premier élément de pièce de raccordement fixe.

3. Ensemble pièce de raccordement selon la revendication 2, dans lequel la bride circonférentielle (11) du premier élément de pièce de raccordement fixe (1) et la bride circonférentielle (9) du second élément de pièce de raccordement interchangeable (2) présentent respectivement un biseau (9a, 11a) de sorte que la bride composée rétrécit vers l'extérieur à l'état monté.

4. Ensemble pièce de raccordement selon la revendication 2 ou 3, dans lequel le dispositif de maintien (3) est conçu pour entourer par serrage la bride (11) du premier élément de pièce de raccordement fixe (1) et la bride (9) du second élément de pièce de raccordement interchangeable (2) et pour les compresser.

5. Ensemble pièce de raccordement selon l'une des revendications précédentes, dans lequel l'ouverture de réception (4) du premier élément de pièce de raccordement fixe (1) comprend une ouverture d'entrée (14), laquelle est conçue de manière à pouvoir être traversée par le raccord (5) ou le capteur.

6. Ensemble pièce de raccordement selon l'une des revendications précédentes, dans lequel le diamètre extérieur (d₂) de la partie du second élément de pièce de raccordement interchangeable (2) reçue par le premier élément de pièce de raccordement fixe (1) est inférieur au diamètre intérieur (d₁) de l'ouverture de réception (13) du premier élément de pièce de raccordement fixe (1).

7. Ensemble pièce de raccordement selon l'une des revendications précédentes, dans lequel un élément d'étanchéité annulaire (16) est disposé entre le premier élément de pièce de raccordement fixe (1) et le second élément de pièce de raccordement interchangeable (2).

8. Ensemble pièce de raccordement selon la revendication 7, dans lequel l'élément d'étanchéité annulaire (16) réalise un siège pour le second élément de pièce de raccordement interchangeable (2), dans lequel, à l'état monté, le siège entoure de manière étanche les parois latérales du second élément de pièce de raccordement interchangeable, du moins dans la zone inférieure.

9. Ensemble pièce de raccordement selon la revendication 7 ou 8, dans lequel l'élément d'étanchéité annulaire (16) présente un bourrelet circonférentiel (16a), lequel est reçu de manière étanche par des rainures (21, 22) correspondantes sur un côté inférieur du second élément de pièce de raccordement interchangeable (2) et sur un fond de réception (18) du premier élément de pièce de raccordement fixe (1).

10. Ensemble pièce de raccordement selon l'une des revendications précédentes, lequel comprend un raccord (5) ou un capteur, dans lequel le second élément de pièce de raccordement interchangeable (2) est raccordé de manière fixe au raccord (5) ou au capteur.

11. Ensemble pièce de raccordement selon la revendication 10, dans lequel le raccord (5) comprend un raccord de nettoyage CIP.

12. Récipient de traitement présentant au moins un ensemble pièce de raccordement selon l'une des revendications 1 à 11, dans lequel le premier élément de pièce de raccordement fixe (1) de l'ensemble pièce de raccordement est soudé dans une paroi (31) du récipient de traitement (30) ou dans le couvercle de récipient (32).

13. Récipient de traitement selon la revendication 12, dans lequel le raccord (5) comprend un raccord de nettoyage CIP qui pénètre à l'intérieur du récipient avec une tête de pulvérisation CIP.
